# FASCICULE DE BREVET EUROPEEN

(11) **EP 3 524 828 B1**
(45) Date de publication et mention de la délivrance du brevet: **16.08.2023**
(21) Numéro de dépôt: 19156629.8
(22) Date de dépôt: 12.02.2019
(51) Int. Cl.: F16B 5/02, F16B 37/04

(54) **DISPOSITIF D'ASSEMBLAGE AVEC ECROU A EMBASE ET PROCEDE D'ASSEMBLAGE DE PLAQUES AVEC UN TEL DISPOSITIF**
VORRICHTUNG ZUM ZUSAMMENBAU MIT BUNDMUTTER, UND ZUSAMMENBAUVERFAHREN VON PLATTEN MIT EINER SOLCHEN VORRICHTUNG
DEVICE FOR ASSEMBLING WITH NUT WITH BASE AND METHOD FOR ASSEMBLING PLATES WITH SUCH A DEVICE

(30) Priorité: 13.02.2018 FR 1870157
(43) Date de publication de la demande: 14.08.2019
(73) Titulaire: Lucas France, 33430 Bazas (FR)
(72) Inventeur: LUCAS, Jean-Jacques, 33124 Auros (FR); LAURENT, Christophe, 33840 Lerm-et-Musset (FR); LABRIET, Olivier, 33730 Noaillan (FR)
(74) Mandataire: Aquinov

(56) Documents cités:
- EP-A1- 1 230 490
- EP-A2- 0 222 301
- US-A- 4 139 314
- US-A- 5 022 804
- US-A- 5 193 643
- US-B1- 9 520 658

## Description

La présente invention concerne l'assemblage de plaques, en particulier à fixer perpendiculairement entre elles par boulonnage, l'écrou étant à embase ou collerette. L'invention sera décrite par rapport à l'assemblage de plaques pour constituer des modules ou caissons rigides, sans toutefois y être limitée. Elle s'applique à tout assemblage de plaques par boulonnage quelle que soit la destination des plaques assemblées.

A titre d'exemple d'application, les plaques une fois assemblées sont destinées à former des surfaces de support d'éléments de guidage sur lesquels sont aptes à circuler des chariots robotisés.

Dans diverses applications industrielles, des chariots robotisés sont utilisés pour transporter diverses charges d'un point à un autre, ou pour déplacer divers outils d'une position de travail à une autre, ou encore pour transporter des robots poly-articulés capables de déplacer une charge ou un outil.

A cet effet, ces chariots robotisés sont alimentés électriquement, par exemple par l'intermédiaire de chaînes porte-câbles, et ils intègrent des moyens électriques et mécaniques leur permettant de se déplacer en translation de manière autonome sur des éléments de guidage.

Ces éléments de guidage prennent la forme de rails droits ou courbes, disposés horizontalement, verticalement ou inclinés le long d'une pente, sur des surfaces de support adaptées.

Selon les applications, ces éléments de guidage peuvent être disposés au sol, en hauteur, sur différents niveaux, ou entre ces différents niveaux.

Dans les diverses applications logistiques, il est nécessaire que les chariots se déplacent le plus rapidement possible d'un point à un autre et de manière fiable, les surfaces de support des éléments de guidage devant être conçues en fonction des charges maximales transportées et des efforts subis lors des déplacements et des accélérations des chariots.

On connaît comme surface de support, des modules ou caissons généralement parallélépipédiques, aboutés les uns aux autres et dont l'ossature rigide est formée de plaques assemblées les unes aux autres comprenant par exemple pour un module, une plaque de fond, des plaques verticales latérales formant les flancs longitudinaux du module, une plaque de dessus ou couvercle, qui recevra les éléments de guidage dans l'utilisation finale du module, et des plaques verticales transversales dites « raidisseurs » pour rigidifier le module, qui relient les flancs longitudinaux en leur étant agencées perpendiculairement.

L'assemblage des plaques est réalisé par boulonnage grâce à des écrous disposés dans des logements/découpes adaptés dans l'épaisseur des plaques et des vis de fixation coopérant avec les écrous. Pour faciliter l'assemblage, les écrous sont tous disposés préalablement dans les plaques, l'insertion des vis se faisant au fur et à mesure une fois les plaques agencées dans leur position d'association.

Pour faciliter l'assemblage, les écrous sont maintenus en position alors même que les vis n'ont pas été introduites. A cet effet, d'une part les écrous sont des écrous fendus dont la fente est usinée de façon à correspondre à l'épaisseur de la plaque, et d'autre part les logements découpés dans les plaques ont un profil spécifique pour accueillir l'écrou et le maintenir en place. Le profil d'un logement comporte une première découpe rectangulaire longitudinale destinée à l'introduction de la vis, une deuxième découpe transversale à la première découpe sensiblement rectangulaire et doté d'un épaulement permettant d'asseoir l'écrou dans cette deuxième découpe par coopération de la rainure avec ledit épaulement, et d'un ergot de butée pour la mise en butée de l'écrou, et une troisième découpe qui dessine une languette apte à être pliée une fois l'écrou en place et rabattue contre l'écrou pour coopérer selon une butée opposée afin de le maintenir en place et empêcher toute sortie hors de son logement. La plaque peut ensuite être manipulée dans tous les sens par l'opérateur, les écrous restant en place.

Cependant, un tel dispositif d'assemblage présente notamment les inconvénients suivants :
- Il est nécessaire de fabriquer des écrous spécifiques, pour les doter d'une rainure tout en veillant à adapter la largeur de la rainure à l'épaisseur des plaques qui seront utilisées.
- La découpe des logements nécessite un profil spécifique avec notamment le dessin de la languette de maintien.
- Le montage des écrous ne peut se faire que manuellement, ce qui nécessite du temps de main d'oeuvre ; il est fastidieux, en particulier au regard d'une part de l'opération de montage de l'écrou qui nécessite plusieurs mouvements, une insertion en translation oblique, une translation verticale pour asseoir l'écrou et une translation horizontale pour sa mise en butée, et d'autre part les opérations de pliage et de rabat de la languette qui sont délicates et nécessitent de la minutie et du temps.

Par ailleurs, il est connu du document EP022301, un procédé d'assemblage par boulonnage de deux plaques, via une pièce dans laquelle est bloqué en position un écrou. Cependant, cette pièce n'est pas adaptée à des écrous avec collerette. Le document WO 2012/029254 montre un dispositif permettant de fixer un écrou de façon stable à un panneau, tel qu'un panneau de porte de véhicule automobile, ce dispositif comportant une pièce qui emprisonne totalement l'écrou et le bloque en position. Toutefois, cette pièce qui est massive (formant un bloc compact) peut s'avérer encombrante pour certaines applications. De plus, faite en matière plastique injectée, elle nécessite des moyens spécifiques de fabrication, notamment un moule approprié, ce qui peut accroître les coûts de fabrication. De même, pour utiliser un écrou dans une application automobile, le document US5193643 décrit une pièce dédiée à être fixée sur un panneau et présentant des moyens de maintien de l'écrou. Toutefois là encore, la pièce peut s'avérer encombrante pour certaines applications.

L'invention a donc pour but de remédier aux inconvénients de l'art antérieur en proposant un dispositif d'assemblage avec écrou qui puisse être monté dans le logement auquel il est destiné, de manière simple et rapide manuellement, et même de manière automatisée, garantissant bien entendu son maintien en position dans le logement tant qu'une vis n'est pas en place dans l'écrou, assurant son immobilisation en rotation lors du vissage de la vis, et permettant une découpe du logement d'accueil qui soit simple de forme pour gagner en temps de fabrication des plaques destinées à être assemblées.

L'invention a également pour but de permettre d'utiliser un écrou de géométrie identique, quelle que soit l'épaisseur de tôle support le recevant ; seul le moyen de maintien de l'écrou dans le logement est l'élément à adapter lorsque nécessaire, ce qui facilite la gestion de stocks. L'invention a encore pour but de proposer un dispositif qui mette en oeuvre des moyens simples de fabrication.

Selon l'invention, le dispositif d'assemblage est tel que revendiqué dans la revendication 1.

En particulier, le dispositif d'assemblage comporte d'une part un écrou présentant un corps creux (avec un alésage taraudé) et une embase ou collerette (solidaire de l'une des extrémités distales du corps de l'écrou et s'étendant transversalement à l'alésage et selon le plan d'introduction de la vis destinée à coopérer avec l'alésage), et d'autre part une pièce (distincte d'une vis) de maintien apte à être rapportée de manière amovible sur l'écrou en emprisonnant une partie de l'écrou (la partie extérieure de l'écrou), en particulier la pièce étant rapportée sur la collerette et/ou autour du corps de l'écrou et constituant un moyen de blocage du dispositif en position d'utilisation dudit dispositif (telle qu'en position insérée du dispositif dans un logement d'accueil prévu dans une plaque destinée à être assemblée perpendiculairement à une autre plaque via une vis coopérant avec l'écrou dudit dispositif). On entend par « position d'utilisation du dispositif », au moins la position pour laquelle le dispositif est disposé dans un logement. Le dispositif d'assemblage (donc l'écrou), est destiné à être agencé dans un logement, en particulier dans un logement d'une plaque rigide à assembler. La plaque est par exemple destinée à former une partie de l'ossature mécanique d'un module ou caisson constituant une surface de support et guidage de chariots robotisés. Ainsi, ce n'est pas l'écrou qui, comme dans l'art antérieur est fabriqué avec des particularités de blocage en position, mais une pièce distincte qui est aisément rapportée de manière amovible sur l'écrou.

Ce dispositif présente l'avantage d'utiliser un écrou du commerce. L'écrou peut présenter une fonction anti-desserrage, en particulier lorsqu'il est destiné à être utilisé dans l'assemblage de plaques destinées à subir des vibrations.

De préférence, la pièce associée à l'écrou est métallique. Elle est simple de fabrication, en étant usinée par découpe et pliage d'une bande de métal.

En outre, l'écrou à embase par la présence de la collerette (c'est-à-dire l'embase), assure une plus grande surface d'appui de l'écrou dans le logement (en particulier sur la tranche du logement) autorisant une diffusion plus large de la reprise des efforts lors du serrage de la vis dans l'écrou en position d'utilisation de l'écrou. La collerette/l'embase peut présenter un diamètre adapté pour augmenter la portée de l'écrou afin de limiter l'atteinte faite au matériau constitutif de la plaque lorsque des efforts de serrage sont exercés. Quant à la pièce de maintien, elle permet de ne pas déformer la collerette lors du serrage.

Par ailleurs, toutes les étapes de montage, en particulier l'étape de montage de la pièce sur l'écrou, qui est une opération de préférence faite en usine, et l'étape de montage du dispositif d'assemblage, peuvent être totalement automatisées, le dispositif de l'invention formant un ensemble monobloc qui est aisé d'introduction dans un logement selon un seul mouvement de translation et reste immobilisé une fois en place dans son logement sans opération supplémentaire.

Le dispositif d'assemblage de l'invention combinant l'écrou et la pièce de maintien/d'emprisonnement est de préférence livré prêt à son montage.

La pièce est apte à être rapportée en étant chaussée selon un mouvement de translation, de préférence un unique mouvement de translation, de direction parallèle ou perpendiculaire au plan d'extension de la collerette (c'est-à-dire selon un mouvement de translation perpendiculaire à l'axe longitudinal de l'alésage prévu dans une plaque pour une vis d'assemblage).

La pièce est de préférence une pièce conçue, telle qu'un clip, pour une fixation mécanique élastique du type clipsage.

Selon une caractéristique, la pièce comporte des éléments de retenue à fonction élastique de pincement.

La fonction élastique des éléments de retenue permet d'une part l'association de la pièce de maintien à l'écrou (par poussée en translation), et d'autre part facilite l'introduction de la pièce dans le logement d'accueil devant recevoir l'écrou.

Selon une caractéristique, la pièce comporte des moyens de verrouillage empêchant le retrait intempestif de l'écrou hors de la pièce une fois la pièce associée/attachée à/solidaire de l'écrou.

En particulier, les moyens de verrouillage possèdent un profil pour former des butées empêchant un retrait intempestif de l'écrou par un mouvement (non volontaire) inverse au mouvement d'introduction de l'écrou dans la pièce.

Selon une autre caractéristique, la pièce comporte des moyens d'immobilisation en position du dispositif (donc de l'écrou) dans sa destination finale, de préférence à fonction élastique, tels que des éléments femelles ou mâles destinés à coopérer avec des formes de coopération mutuelle du logement dans lequel est destiné à être placé le dispositif pour son utilisation. Par exemple, les moyens d'immobilisation comportant deux paires de languettes élastiques espacées et en saillie qui sont inclinées l'une vers l'autre ; les languettes de chaque paire délimitent un espace intermédiaire qui est destiné à coopérer avec l'épaisseur du logement dans lequel est destiné à être reçu le dispositif, en particulier avec les faces opposées de la plaque dotée du logement, qui forment des surfaces de coopération mutuelle par butée. Dans un autre exemple, les moyens d'immobilisation forment des décrochements destinés à coopérer avec l'épaisseur du logement dans lequel est destiné à être placé le dispositif pour son utilisation.

Les moyens d'immobilisation sont de préférence intrinsèques à la pièce, en étant issus d'un usinage de la pièce.

Les moyens d'immobilisation à fonction élastique permettent l'insertion de la pièce, donc du dispositif d'assemblage, dans le logement d'une plaque, et de bloquer la pièce en position (et donc le dispositif et son écrou) une fois la pièce en place dans le logement en venant en butée par effet ressort.

Avantageusement, la pièce comporte une âme et deux éléments de retenue parallèlement opposés et reliés à l'âme, l'âme et les ailes ménageant une cavité d'accueil ouverte sur l'environnement extérieur et logeant la collerette de l'écrou ou le corps de l'écrou.

Les éléments de retenue dépassent/sont en saillie par rapport au corps de l'écrou.

En position montée de la pièce sur l'écrou, les éléments de retenue s'étendent soit dans des plans parallèles au plan de la collerette, soit dans des plans perpendiculaires au plan de la collerette.

Lorsque la pièce prend en sandwich la collerette, le maintien est obtenu selon deux plans de serrage parallèles et de part et d'autre des faces générales de la collerette, et/ou selon deux plans de serrage opposés perpendiculaires au plan d'extension de la collerette (perpendiculaires à la tranche de la collerette).

Lorsque la pièce prend en sandwich le corps de l'écrou, le maintien peut être obtenu selon deux plans de serrage opposés parallèles et de manière tangentielle à la surface périphérique extérieure dudit corps.

Dans un mode de réalisation avantageux, la pièce comporte :
- une âme dotée d'un orifice central à travers lequel est engagé le corps de l'écrou, ledit corps s'étendant librement au-delà de l'âme et la collerette de l'écrou reposant au moins en partie (notamment en et uniquement à proximité de sa périphérie) sur l'âme,
- des éléments de retenue (qui servent à retenir l'écrou dans la pièce) partant du bord de l'âme (et de la face dite intérieure de l'âme) et pinçant localement la collerette de l'écrou (pinçant localement la face de la collerette à l'opposé du corps de l'écrou), de préférence au moins de manière diamétralement opposée, et
- les moyens d'immobilisation qui sont intégrés à l'âme et font saillie (depuis la face dite extérieure de l'âme) dans une direction opposée aux éléments de retenue.

Dans ce mode de réalisation, les moyens d'immobilisation se présentent sous la forme de deux paires de languettes espacées, chaque paire (en particulier en étant diamétralement opposée) étant dans un plan décalé par rapport au plan contenant les éléments de retenue. De plus, les languettes d'une même paire qui font saillie par rapport à l'âme sont inclinées par rapport à l'âme et dirigées l'une vers l'autre.

Dans ce mode de réalisation, l'âme entoure le corps de l'écrou selon une partie seulement de son épaisseur. L'âme est fine. L'âme possède une fine épaisseur telle que de l'ordre de 0,5 à 1,5mm. L'âme est de préférence issue d'une feuille métallique. L'âme présente de préférence une concavité telle que comprenant des pans inclinés partant des éléments de retenue vers l'orifice central.

Dans deux autres modes de réalisation avantageux de l'invention, la pièce prend en sandwich les deux faces opposées de la collerette, le corps de l'écrou étant libre et en saillie de la pièce, la pièce présentant une forme en U avec deux ailes parallèles et espacées soit d'une distance correspondant à l'épaisseur de la collerette (en s'étendant des plans parallèles et de chaque côté des faces de la collerette), soit d'une distance correspondant au diamètre du corps de l'écrou (en s'étendant dans des plans perpendiculaires aux faces de la collerette). Avantageusement, le dispositif est manipulable par un robot pour son introduction dans sa destination finale telle qu'un logement, de préférence selon un unique mouvement de translation.

L'invention est également relative à une plaque rigide d'ossature mécanique comportant au moins une découpe dans son épaisseur, en particulier en partant du chant de la plaque, la découpe formant un logement d'accueil dans lequel est introduit un dispositif d'assemblage de l'invention, le dispositif d'assemblage étant destiné à assembler une plaque rigide et un autre élément du type plaque en vissant de manière contrôlée dans l'écrou (dans l'alésage taraudé du corps de l'écrou) une vis qui traverse préalablement ledit élément du type plaque. Avantageusement, selon un mode de réalisation, la découpe comporte une section longitudinale s'étendant depuis le chant de la plaque et adaptée à accueillir la tige d'une vis, une section transversale de préférence rectangulaire agencée en extrémité de la section longitudinale à l'opposé du chant, et perpendiculaire à la section longitudinale, et adaptée à accueillir la collerette de l'écrou et éventuellement la pièce lorsque celle-ci est attachée à la collerette, ainsi qu'une section terminale de préférence également rectangulaire plus large que la largeur de la section transversale et adaptée à accueillir le corps de l'écrou et éventuellement la pièce lorsque celle-ci est attachée au corps de l'écrou.

Ainsi, cette découpe est extrêmement simple et rapide à réaliser, gagnant en temps de fabrication des plaques.

Par ailleurs, l'invention porte sur une installation comportant une pluralité de plaques précitées selon l'invention, chaque plaque logeant des dispositifs d'assemblage selon l'invention et étant assemblée avec une autre plaque dotée d'alésages pour le passage de vis qui coopèrent avec les dispositifs d'assemblage.

On entend par « épaisseur » dans la suite de la description, la dimension perpendiculaire aux faces principales de la plaque. Le terme « largeur » correspond à la dimension perpendiculaire à l'épaisseur et parallèle au chant de la plaque.

Enfin, l'invention est également relative à un procédé d'assemblage par boulonnage d'au moins deux plaques à partir d'au moins un dispositif d'assemblage de l'invention, le procédé comportant les étapes suivantes :
- la pièce de maintien du dispositif d'assemblage est ou a été associée préalablement par clipsage sur l'écrou pour former ledit dispositif d'assemblage,
- le au moins un dispositif d'assemblage est introduit dans au moins un logement découpé de manière adaptée dans une première des plaques, ledit dispositif étant auto-bloqué une fois introduit,
- la seconde plaque est agencée perpendiculairement à la première plaque et comporte au moins un alésage en regard du logement de la première plaque,
- une vis est insérée dans l'alésage de la seconde plaque et le logement de la première plaque jusqu'à sa coopération avec l'intérieur de l'écrou du dispositif d'assemblage,
- la vis est vissée.

Ainsi, le dispositif d'assemblage permet notamment les fonctions suivantes :
- L'écrou est mis en place sans effort dans la pièce de maintien.
- L'association de l'écrou à la pièce de maintien permet un montage mécanisable.
- La mise en place du dispositif d'assemblage se fait perpendiculairement à la plaque avec un effort minime, inférieur à 20 N.
- La forme de la découpe dans la plaque est identique, quelle que soit l'épaisseur de la plaque, pour un même filetage de vis.
- Le dispositif d'assemblage permet d'assembler des plaques d'épaisseur différente.
- L'écrou est maintenu plaqué dans la découpe du logement tout en gardant une petite liberté de mouvement dans la pièce de maintien, de sorte que tout le couple de serrage soit transmis via l'écrou dans la plaque accueillant la pièce de maintien.
- L'assemblage des plaques obtenu par les dispositifs d'assemblage de l'invention est sans jeu et est apte à transmettre/répartir des efforts dans toutes les directions, avantageusement, les plaques à assembler pouvant comprendre en sus des liaisons mécaniques de coopération mutuelle de type tenon-mortaise ou autres.

D'autres caractéristiques et avantages ressortiront de la description qui va suivre de l'invention, description donnée à titre d'exemple uniquement, en regard des dessins annexés sur lesquels :
- la figure 1 représente une vue en perspective du dispositif d'assemblage de l'invention selon un premier mode de réalisation, l'écrou étant agencé dans sa pièce de maintien ;
- la figure 2A est une vue en perspective de l'écrou
- la figure 2B est une vue en perspective du dispositif d'assemblage de la figure 1 associé à une vis ;
- la figure 3A est une vue de dessus d'une plaque selon l'invention dotée de plusieurs logements pour accueillir des dispositifs d'assemblage de l'invention;
- la figure 3B est une vue de face d'un logement de la plaque de la figure 3A ;
- la figure 4 est une vue en perspective du dispositif d'assemblage de la figure 1 en position d'utilisation dans un logement, et avec lequel coopère une vis ;
- la figure 5A est une vue de face du logement de la figure 4 avec le dispositif d'assemblage de la figure 1 bloqué dans ledit logement ;
- la figure 5B est une vue de côté partielle de la plaque et du dispositif d'assemblage de la figure 1 agencé et bloqué dans un logement d'accueil de la plaque ;
- la figure 6 est une vue en perspective en cours de montage d'un module utilisant des plaques du type de celle de la figure 3A et des dispositifs d'assemblage de la figure 1 ;
- la figure 7 est une vue en perspective du module assemblé de la figure 6 ;
- la figure 8A est vue en perspective d'un deuxième mode de réalisation du dispositif d'assemblage de l'invention ;
- la figure 8B est une vue de dessous du dispositif de la figure 8A ;
- la figure 8C est une vue en perspective du dispositif d'assemblage de la figure 8A en position d'utilisation après assemblage de deux plaques ;
- les figures 9A et 9B sont des vues en perspective d'une troisième variante de réalisation du dispositif d'assemblage, respectivement avant et après montage en position d'utilisation ;
- les figures 10A et 10B sont des vues en perspective d'une quatrième variante de réalisation du dispositif d'assemblage, respectivement avant et après montage en position d'utilisation.

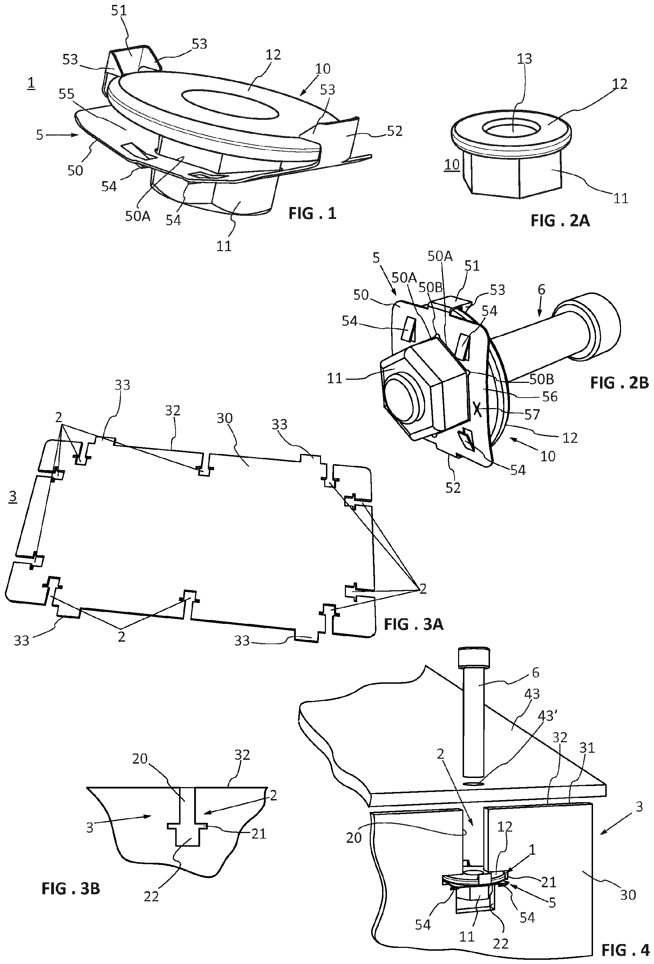

Le dispositif d'assemblage 1 à écrou de l'invention illustré sur la figure 1 est destiné à l'assemblage par boulonnage de plaques. Il est destiné à être maintenu en position dans un logement 2 formant une découpe appropriée dans une plaque 3 de l'invention (figures 3A, 3B, 4, 5A et 5B).

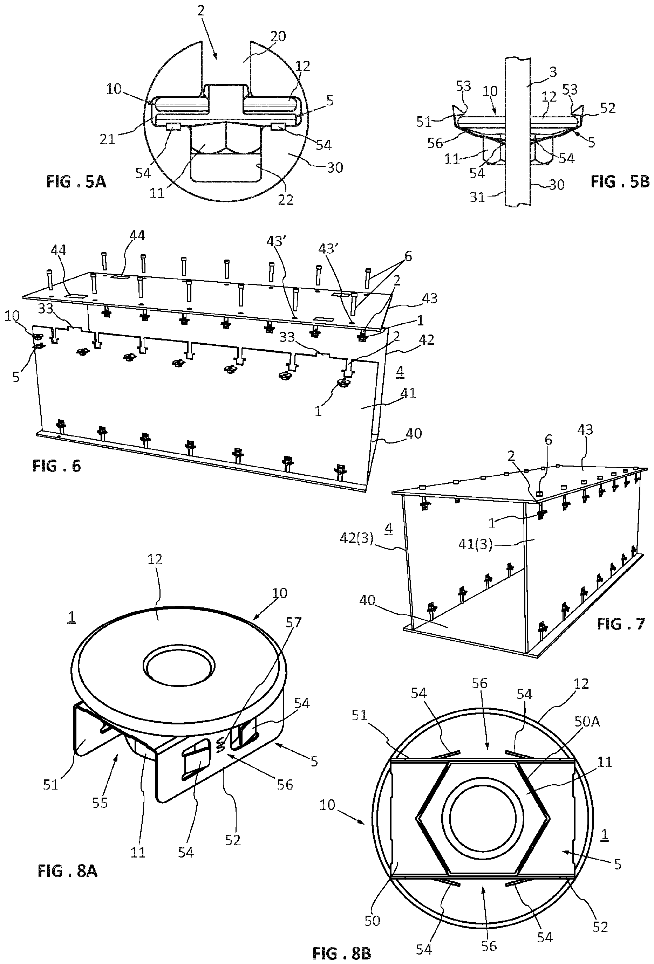

Une plaque 3 selon l'invention, telle qu'illustrée sur les figures 6 et 7, comporte plusieurs logements 2.

Les plaques 3 et la pluralité de dispositifs 1 de l'invention permettent de former un module ou caisson rigide 4 de forme générale parallélépipédique, tel qu'illustré sur la figure 7. Un tel module parallélépipédique comporte un fond 40, des parois verticales opposées 41 et 42, un couvercle 43 et éventuellement des raidisseurs non illustrés qui sont transversaux aux parois verticales. Les parois verticales 41 et 42 sont formées à partir des plaques 3 de l'invention. Dans un exemple nullement limitatif d'utilisation d'assemblage de plaques 3, l'aboutement de plusieurs modules 4 permet de former des surfaces de support pour y fixer des éléments de guidage du type rails sur lesquels sont aptes à circuler des chariots robotisés.

Une plaque 3 de l'invention présente deux faces générales opposées 30 et 31 et comporte dans son épaisseur et à partir du chant 32 de la plaque au moins une découpe traversante entre les deux faces 30 et 31. La découpe constitue le logement 2.

Le logement 2 est réalisé dans la plaque selon une découpe dont la géométrie est simplifiée par rapport à l'art antérieur et est sensiblement en forme générale de croix latine. Chaque logement 2 présente une découpe adaptée en forme et en dimensions pour accueillir dans une position de retenue le dispositif d'assemblage 1 de l'invention sans aucun élément de verrouillage en position qui soit complémentaire ou rapporté.

De préférence, une plaque 3 de l'invention et un plaque simple à assembler 43 comportent des liaisons mécaniques de coopération mutuelle 33, 44 du type tenons-mortaises. Une variante d'immobilisation des tôles en translation peut être obtenue en insérant par exemple un dispositif ou une pièce de forme, enserrant le corps fileté de la vis et faisant office de goupille de mise en position sans jeu des plaques 3 et 43.

Selon l'invention, en regard des figures 1, 2A et 2B, le dispositif d'assemblage 1 comporte un écrou à embase 10 et une pièce 5 de maintien/d'emprisonnement de l'écrou 10, qui est rapportée de manière amovible sur l'écrou.

En regard de la figure 4, la pièce 5 constitue un moyen de blocage du dispositif d'assemblage 1 dans le logement 2. Pour associer une plaque 3 de l'invention avec le couvercle 43 par boulonnage via le dispositif d'assemblage 1 de l'invention, une vis 6 est prévue pour coopérer avec un alésage 43' du couvercle et le logement 2 de la plaque 3 ainsi qu'avec l'écrou 10 du dispositif.

Le dispositif d'assemblage 1 peut être livré avec l'écrou 10 déjà associé à la pièce d'emprisonnement/de blocage 5.

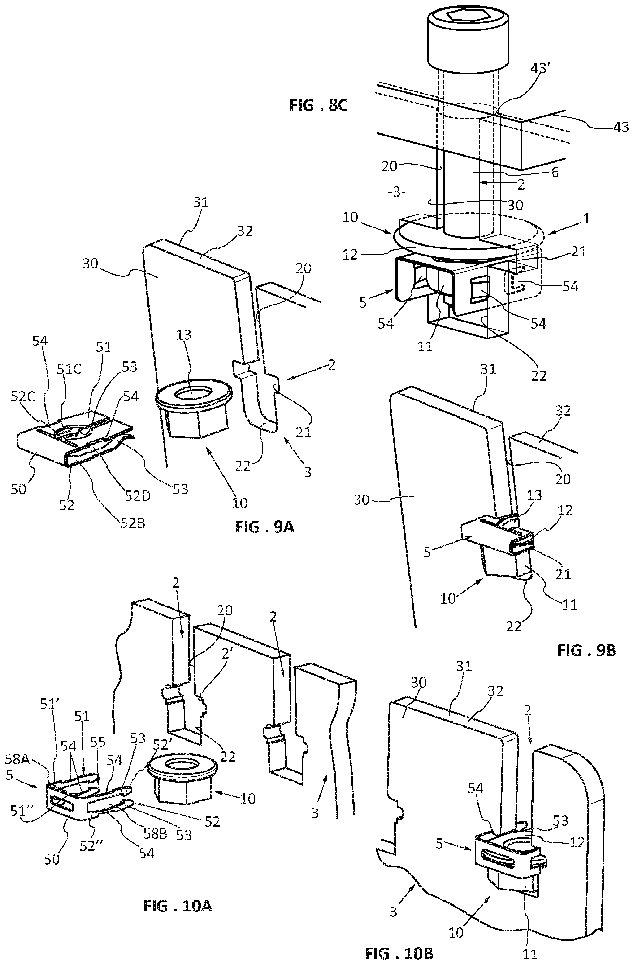

Selon l'invention, en regard de la figure 3B, 4, 5A et 5B, le logement 2 comporte une section longitudinale 20 s'étendant depuis le chant 32 de la plaque 3 et adaptée à accueillir la tige 6 d'une vis (figures 2B et 4), une section transversale 21 rectangulaire agencée en extrémité de la section longitudinale à l'opposé du chant 32, perpendiculaire à la section longitudinale, relativement étroite et adaptée à accueillir la collerette 12 de l'écrou et éventuellement la pièce 5 lorsque celle-ci est attaché ou emprisonne la collerette (variantes des figures 1, 9B et 10B), ainsi qu'une section terminale 22 également rectangulaire plus large que la largeur de la section longitudinale 20 et adaptée à accueillir le corps 11 de l'écrou et éventuellement la pièce 5 (pour le variante de la figure 8C) lorsque celle-ci est attachée au corps 11 et non à la collerette.

En regard des quatre modes de réalisation des dispositifs d'assemblage 1 de l'invention, qui sont illustrés à titre d'exemples nullement limitatifs, respectivement aux figures 1 et 4, 8A et 8C, 9A et 9B, et 10A et 10B, l'écrou à embase 10 (figure 2A) comprend un corps cylindrique creux 11 et une collerette 12 annulaire qui est solidaire de l'une des extrémités libres du corps. Le corps creux comporte un alésage intérieur 13 taraudé destiné à accueillir la tige filetée de la vis 6 lors de l'utilisation du dispositif. La surface extérieure du corps 11 est de forme hexagonale. La collerette 12 s'étend dans un plan perpendiculaire au corps et est agencée au niveau du plan d'introduction de la vis destinée à être introduite dans le corps creux lors de l'utilisation du dispositif.

De préférence, l'écrou à embase 10 est un écrou auto-freiné comprenant une bague du type en nylon agencée dans et en extrémité de l'alésage 13 et à l'opposé de la collerette 12.

Le dispositif de l'invention utilise avantageusement un écrou du commerce. Par exemple, un écrou présentant les caractéristiques ci-dessus est un écrou Nylstop^{®}.

Pour l'application visée, la taille de l'écrou est de préférence M10.

La pièce 5 de maintien de l'écrou 10 peut présenter diverses formes.

Pour les modes de réalisation illustrés, une des sections de la pièce est de forme générale en U.

La pièce 5 comporte une âme 50 et deux éléments de retenue ou ailes 51 et 52, espacés et disposés dans deux plans opposés et parallèles, et solidaires de l'âme 50. L'écrou 10 est maintenu ou emprisonné dans la pièce 5 par les éléments de retenue 51 et 52.

La pièce 5 forme avantageusement un clip.

La pièce 5 est fixée par clipsage autour de l'écrou 10.

Les éléments de retenue/ailes 51 et 52 sont à fonction de retenue élastique. La fonction élastique favorise l'insertion en force de l'écrou 10 dans la pièce 5 et permet ensuite de maintenir l'écrou.

La pièce 5 possède un effet élastique de serrage ou pincement pour retenir l'écrou 10.

Dans le premier mode de réalisation de la figure 1, les éléments de retenue 51 et 52 sont en applique de manière ferme contre la collerette 12. Les éléments de retenue 51 et 52 serrent la collerette 12. Les éléments de retenue 51 et 52 sont de taille inférieure au diamètre de la collerette 12 de sorte que la collerette dans son plan d'extension dépasse de part et d'autre desdits éléments de retenue 51 et 52.

Dans le deuxième mode de réalisation de la figure 8C, les ailes 51 et 52 sont en applique de manière ferme contre le corps 11 de l'écrou. Les ailes 51 et 52 prennent en sandwich le corps 11 de l'écrou.

Dans les troisième et quatrième modes de réalisation des figures 9B et 10B, les ailes 51 et 52 sont en applique de manière ferme contre la collerette 12. Les ailes 51 et 52 prennent en sandwich la collerette 12.

Avantageusement, la pièce 5 comporte en outre des moyens de verrouillage 53 de l'écrou dans la pièce. Ces moyens de verrouillage 53 garantissent un retrait intempestif de l'écrou hors de la pièce.

Le montage de la pièce 5 sur l'écrou, quel que soit le mode de réalisation de ladite pièce, est apte à être effectué par un robot. Le robot se saisit de la pièce à la manière d'une pince au niveau des ailes 51 et 52, et la chausse selon un seul mouvement de translation sur le corps ou la collerette de l'écrou.

Par ailleurs, le dispositif 1 via la pièce 5 comporte des moyens d'immobilisation/de blocage 54 du dispositif 1 dans le logement 2, évitant la chute/perte du dispositif une fois celui-ci assis dans son logement. Les moyens d'immobilisation 54 sont intrinsèques au dispositif, en particulier intrinsèques/monobloc à la pièce 5, évitant de rapporter ou d'utiliser des moyens complémentaires de fixation. Les moyens d'immobilisation 54 sont usinés dans l'âme 50 lorsque celle-ci est métallique.

Les moyens d'immobilisation 54 sont destinés à coopérer par butée avec la plaque 3 (figures 4, 5A, et 5B) afin de verrouiller en position le dispositif d'assemblage 1 dans son logement 2. Le dispositif d'assemblage 1 de l'invention peut avantageusement être installé dans le logement 2 par un robot.

Le dispositif d'assemblage 1 est introduit par un seul mouvement de translation dans la section idoine du logement 2 (ici la section transversale 21).

La pièce de maintien 5, à fonction élastique, est insérée légèrement en force (notamment avec un effort minime inférieur à 20 N) dans la section d'accueil du logement 2 et maintenue en position dans ladite section par les moyens d'immobilisation 54 sans moyens rapportés extérieurs à la pièce.

La section du logement 2 présente des dimensions adaptées pour correspondre au volume du dispositif 1 afin que celui-ci soit bloqué en position une fois introduit. En particulier, la hauteur de la section transversale 21 (direction de la section longitudinale 20) est légèrement inférieure à la hauteur du dispositif 1 (ensemble pièce-écrou) de sorte que par effet ressort de la pièce de maintien 5, ladite pièce 5 est auto-bloquée et la collerette 12 de l'écrou 10 est plaquée contre la partie supérieure de la section 21 qui correspond à la surface recevant les efforts de serrage lorsque la vis serra vissée dans l'écrou.

Dans le mode de réalisation de la figure 1, la pièce 5 prend en sandwich la collerette 12 selon deux plans parallèles opposés tangents au bord périphérique/la tranche de la collerette (perpendiculairement au plan de la collerette).

Dans ce mode de réalisation, l'âme 50 de la pièce 5 est dans un plan perpendiculaire aux plans des éléments de retenue/ailes 51 et 52. L'âme 50 et les éléments de retenue 51 et 52 ménagent une cavité d'accueil 55 pour l'écrou. L'âme 50 comporte un orifice 50A dont la géométrie correspond à la géométrie de la périphérie extérieure du corps 11 de l'écrou, ici hexagonale.

L'écrou 10 est associé à la pièce 5 par insertion de son corps 11 à travers l'orifice 50A et son accueil dans la cavité 55 tandis que la collerette 12 repose sur l'âme 50.

La périphérie du trou 50A est de dimension ajustée par rapport au corps 11 de l'écrou avec de préférence (figure 2B) en regard de chaque arête du corps de l'écrou une découpe concave 50B pour ménager un léger jeu angulaire.

Les moyens de verrouillage 53 sont constitués par une ou des pattes s'étendant perpendiculairement à chaque élément de retenue 51, 52 et sont en appui sur la face principale de la collerette 12 à l'opposé du corps 11.

Les moyens d'immobilisation 54 sont agencés sur l'âme 50, en particulier sur la face extérieure, à l'opposé de la cavité d'accueil 55.

Dans l'exemple représenté (figures 2B, 2C, 4 et 5), les moyens d'immobilisation 54 forment deux paires de languettes espacées, en saillie vers l'extérieur (par rapport à l'âme 50) et inclinées l'une vers l'autre. Les languettes 54 d'une paire ménagent entre elles un espace 56 correspondant à l'épaisseur du logement 2 de la plaque 3 (figure 5B).

Les languettes 54 sont à fonction élastique. La fonction élastique permet d'introduire la pièce dans le logement 2.

L'espace 56 entre les languettes de chaque paire coopère avec l'épaisseur de la plaque 3 (figure 5B). L'extrémité libre des languettes 54 vient pincer des surfaces d'appui qui sont perpendiculaires à l'épaisseur du logement/l'épaisseur de la plaque. Les surfaces d'appui correspondent en particulier aux faces générales opposées 30 et 31 d'une plaque 3 de module dans laquelle sont découpés des logements d'accueil 2.

La découpe 21 à section transversale accueille la pièce de maintien 5 retenant l'écrou 10. L'écrou 10 est maintenu plaqué par sa collerette 12 dans la découpe 21 du logement 2 tout en gardant une petite liberté de mouvement dans la pièce de maintien 5, de sorte que tout le couple de serrage soit transmis via l'écrou dans la plaque 3.

Enfin, la pièce 5 peut comprendre un élément de repérage 57 inscrit sur la pièce, par exemple un chiffre, et lisible par le robot pour que celui-ci se saisisse automatiquement de la pièce afin d'assurer l'adéquation de la bonne dimension de l'espace 56 avec l'épaisseur de la plaque.

Dans le deuxième mode de réalisation de la figure 8A, la pièce 5 prend en sandwich le corps 11 selon deux plans parallèles opposés tangents à la surface périphérique extérieure du corps et perpendiculaires au plan de la collerette 12.

Dans ce mode de réalisation de la figure 8A, l'âme 50 de la pièce 5 est dans un plan perpendiculaire aux plans des ailes 51 et 52. L'âme 50 et les ailes 51 et 52 ménagent une cavité d'accueil 55 pour le corps 11 de l'écrou. Les ailes sont sensiblement pleines. L'âme 50 comporte un orifice 50A dont la géométrie correspond à la géométrie de la périphérie extérieure du corps 11 de l'écrou, ici hexagonale.

L'écrou 10 est associé à la pièce 5 par insertion de son corps 11 à travers l'orifice 50A et son accueil dans la cavité 55 tandis que la collerette 12 repose sur l'âme 50.

De plus, chacune des faces extérieures des ailes 51 et 52, faces opposées à la cavité d'accueil 55, comporte les moyens d'immobilisation 54 qui sont destinés à coopérer avec des formes de coopération mutuelle du logement 2 dans lequel est destiné à être placé l'écrou (figure 8C) afin de verrouiller en position de l'écrou dans son logement.

Dans l'exemple représenté, les moyens d'immobilisation 54 forment sur chaque face extérieure des ailes 51, 52, deux languettes espacées, en saillie vers l'extérieur (par rapport au plan de chaque face) et inclinées l'une vers l'autre. Les languettes 54 ménagent entre elles un espace 56 dont la dimension selon la direction de la longueur des ailes correspond à l'épaisseur du logement 2 de la plaque 3.

Les languettes 54 sont à fonction élastique. La fonction élastique permet d'introduire la pièce dans le logement 2.

L'espace entre les languettes coopère avec l'épaisseur du logement, l'extrémité libre des languettes venant pincer des surfaces d'appui qui sont perpendiculaires à l'épaisseur du logement (figure 8C). Les surfaces d'appui correspondent en particulier aux faces générales opposées d'une plaque de module dans laquelle sont découpés des logements d'accueil.

Dans le troisième mode de réalisation de la figure 9A, la pièce 5 prend en sandwich la collerette 12 selon deux plans parallèles opposés tangents respectivement aux faces générales opposées de la collerette.

Dans ce troisième mode de réalisation des figures 9A et 9B, l'âme 50 de la pièce 5 est dans un plan perpendiculaire aux plans des ailes 51 et 52. Les ailes 51 et 52 ne présentent pas la même forme.

L'aile 51 dite supérieure et chapeautant la face supérieure de la collerette 12 (face opposée au corps) comporte un trou 51C qui est en regard de l'alésage 13 de l'écrou en position montée de la pièce 5 sur l'écrou. Le trou 51C permet le passage de la vis.

L'aile 52 dite inférieure est partagée en deux pattes parallèles 52B et 52C coplanaires et non jointives qui délimitent à l'opposé de l'âme 50 l'ouverture du U pour le passage du corps 11 de l'écrou, et de manière centrale une cavité d'accueil 52D pour l'emplacement du corps 11 de l'écrou.

Les moyens de verrouillage 53 de l'écrou 10 dans la pièce 5 sont disposés sur les pattes 52B et 52C. Ils sont constitués pour chaque patte par un épaulement agencé en extrémité libre de la patte et remontant en direction de l'aile supérieure 51. Chaque épaulement forme une butée interne pour le corps 11 de l'écrou.

Les moyens d'immobilisation 54 sont formés par deux encoches opposées établies sur les deux tranches longitudinales opposées de l'aile supérieure 51. En position montée du dispositif 1, donc de la pièce 5, dans le logement 2, les encoches 54 coopèrent avec l'épaisseur de la section transversale 21 du logement 2.

Dans le quatrième mode de réalisation de la figure 10A, la pièce 5 prend en sandwich la collerette 12 au niveau de ses deux faces générales respectives et selon deux plans parallèles opposés, tangents à la surface périphérique extérieure du corps 11.

Dans ce quatrième mode de réalisation des figures 10A et 10B, l'âme 50 de la pièce 5 est dans un plan perpendiculaire aux plans des ailes 51 et 52 et délimite avec les ailes l'ouverture du U, la cavité intérieure d'accueil 55 pour y loger la collerette 12 de l'écrou. De plus, chaque aile 51, 52 comporte une fente 58A, 58C s'étendant depuis l'extrémité libre desdites ailes jusqu'à proximité de l'âme 50, pour l'insertion de la collerette 12 dans lesdites fentes. Chaque fente 58A,58C partage l'aile associée en deux branches parallèles 51', 51", respectivement 52', 52". Les moyens de verrouillage 53 sont disposés dans chacune des fentes 58A, 58C à proximité des extrémités libres des branches parallèles 51', 51", respectivement 52', 52" des ailes, et forment pour chaque fente deux épaulements haut et bas dirigés l'un vers l'autre et coplanaires à chaque aile, contre lesquels vient en butée le chant de la collerette 12 une fois insérée dans les fentes.

Les moyens d'immobilisation 54 sont formés par deux paires d'encoches opposées établies sur les deux tranches longitudinales opposées de chacune des branches 51', 51", et 52', 52" des ailes 51 et 52. En position montée du dispositif 1, donc de la pièce 5, dans le logement 2, les encoches 54 coopèrent avec l'épaisseur de la section transversale 21 du logement 2.

Par conséquent, le dispositif d'assemblage 1 de l'invention, en disposant d'un écrou à embase 10 emprisonnée dans la pièce de blocage 5, permet de manière simple de maintenir en position l'écrou dans le logement 2 d'une plaque, logement dont la découpe est en outre simplifiée. De plus, l'ensemble des opérations de montage de la pièce de blocage 5 sur l'écrou 10, et d'installation du dispositif d'assemblage 1 dans le logement 2 peut se faire de manière robotisée, contrairement à l'art antérieur.

## Revendications

1. Dispositif d'assemblage (1) comportant d'une part un écrou (10) présentant un corps (11) creux et une collerette (12), et d'autre part une pièce (5) apte à être associée de manière amovible à l'écrou pour emprisonner et bloquer l'écrou, la pièce (5) comprenant des moyens d'immobilisation (54) de l'écrou de façon que la pièce et l'écrou forment un dispositif d'assemblage monobloc, et la pièce (5) constituant un moyen de blocage du dispositif en position d'utilisation dudit dispositif, la pièce (5) n'emprisonnant qu'une partie de l'écrou et étant attachée, soit au corps (11) de l'écrou, soit à la collerette (12), et la pièce (5) comportant des éléments de retenue (51, 52) à fonction élastique de pincement formant deux ailes opposées, **caractérisé en ce que** la collerette (12) dans son plan d'extension dépasse des ailes (51, 52) de la pièce (5) pour dépasser de ladite pièce (5).

2. Dispositif d'assemblage selon la revendication 1, **caractérisé en ce que** la pièce (5) est apte à être rapportée en étant chaussée selon un mouvement de translation, de préférence un unique mouvement de translation, de direction parallèle ou perpendiculaire au plan d'extension de la collerette, en particulier l'association de la pièce à l'écrou se faisant via un robot.

3. Dispositif d'assemblage selon la revendication 1 ou 2, **caractérisé en ce que** la pièce (5) est conçue, telle qu'un clip, pour une fixation mécanique élastique du type clipsage.

4. Dispositif d'assemblage selon l'une quelconque des revendications précédentes, **caractérisé en ce que** la pièce (5) comporte des moyens de verrouillage (53) empêchant le retrait intempestif de l'écrou hors de la pièce (5) une fois la pièce associée à l'écrou (10).

5. Dispositif d'assemblage selon l'une quelconque des revendications précédentes, **caractérisé en ce que** les moyens d'immobilisation (54) permettant d'immobiliser le dispositif en position dans sa destination finale, sont à fonction élastique, tels que des éléments femelles ou mâles destinés à coopérer avec des formes de coopération mutuelle d'un logement (2) dans lequel est destiné à être placé le dispositif pour son utilisation.

6. Dispositif d'assemblage selon l'une quelconque des revendications précédentes, **caractérisé en ce que** les moyens d'immobilisation (54) comportent deux paires de languettes élastiques espacées et en saillie qui sont inclinées l'une vers l'autre.

7. Dispositif d'assemblage selon l'une quelconque des revendications précédentes, **caractérisé en ce que** la pièce (5) comporte une âme (50) et deux éléments de retenue (51, 52) parallèlement opposés et reliés à l'âme et formant les ailes, l'âme et les ailes ménageant une cavité d'accueil (55, 52D) ouverte sur l'environnement extérieur et logeant la collerette (12) de l'écrou ou le corps (11) de l'écrou.

8. Dispositif d'assemblage selon l'une quelconque des revendications précédentes, **caractérisé en ce qu'**il est manipulable par un robot pour son introduction dans sa destination finale telle qu'un logement (2), de préférence selon un unique mouvement de translation.

9. Plaque rigide (3) comportant au moins une découpe dans son épaisseur, en particulier en partant du chant (32) de la plaque, la découpe formant un logement d'accueil (2) dans lequel est introduit un dispositif d'assemblage (1) selon l'une quelconque des revendications précédentes, de préférence la découpe comportant une section longitudinale (20) s'étendant depuis le chant de la plaque et adaptée à accueillir la tige d'une vis, une section transversale (21), de préférence rectangulaire, agencée en extrémité de la section longitudinale (20) à l'opposé du chant, et perpendiculaire à la section longitudinale, et adaptée à accueillir la collerette (12) de l'écrou et éventuellement la pièce (5) lorsque celle-ci est attachée à la collerette (12), ainsi qu'une section terminale (22) de préférence également rectangulaire plus large que la largeur de la section transversale et adaptée à accueillir le corps (11) de l'écrou et éventuellement la pièce (5) lorsque celle-ci est attachée au corps (11) de l'écrou.

10. Installation (4) comportant une pluralité de plaques (3) selon la revendication précédente, chaque plaque (3) logeant des dispositifs d'assemblage selon l'une quelconque des revendications 1 à 7 et étant assemblée avec une autre plaque (43) dotée d'alésages pour le passage de vis qui coopèrent avec les dispositifs d'assemblage, notamment l'installation formant une installation de support pour fixer des éléments de guidage sur lesquels sont destinés à circuler au moins un chariot robotisé.

11. Procédé d'assemblage par boulonnage d'au moins deux plaques (3, 43) à partir d'au moins un dispositif d'assemblage (1) selon l'une quelconque des revendications 1 à 7, comportant les étapes suivantes :
- la pièce de maintien (5) est ou a été associée préalablement par clipsage sur l'écrou (10) pour former ledit dispositif d'assemblage,
- au moins un dispositif d'assemblage (1) est introduit dans au moins un logement (2) découpé de manière adaptée dans une première des plaques (3), ledit dispositif étant auto-bloqué une fois introduit,
- la seconde plaque (43) est agencée perpendiculairement à la première plaque et comporte au moins un alésage (43') en regard du logement (2) de la première plaque,
- une vis (6) est insérée dans l'alésage (43') de la seconde plaque et le logement (2) de la première plaque jusqu'à sa coopération avec l'intérieur de l'écrou (10) du dispositif d'assemblage,
- la vis (6) est vissée.

## Patentansprüche

1. Vorrichtung (1) zum Zusammenbau, die einerseits eine Mutter (10), die einen hohlen Körper (11) und einen Kragen (12) vorweist, und andererseits ein Teil (5) umfasst, das lösbar mit der Mutter verknüpft werden kann, um die Mutter einzuschließen und zu arretieren, wobei das Teil (5) Mittel (54) zum Immobilisieren der Mutter enthält, so dass das Teil und die Mutter eine einstückige Vorrichtung zum Zusammenbau bilden, und das Teil (5) ein Mittel zum Arretieren der Vorrichtung in einer Verwendungsposition der Vorrichtung ausbildet, wobei das Teil (5) nur einen Teil der Mutter einschließt und entweder an dem Körper (11) der Mutter oder an dem Kragen (12) befestigt ist, und wobei das Teil (5) Halteelemente (51, 52) mit elastischer Klemmfunktion umfasst, die zwei gegenüberliegende Flügel bilden, **dadurch gekennzeichnet, dass** der Kragen (12) in seiner Erstreckungsebene über die Flügel (51, 52) des Teils (5) hinaus ragt, um über das Teil (5) hinaus zu ragen.

2. Vorrichtung zum Zusammenbau nach Anspruch 1,
**dadurch gekennzeichnet, dass** das Teil (5) durch Einpassen mit einer Translationsbewegung, vorzugsweise einer einzigen Translationsbewegung, parallel oder senkrecht zu der Erstreckungsebene des Kragens angebracht werden kann, wobei insbesondere die Verknüpfung des Teils mit der Mutter über einen Roboter erfolgt.

3. Vorrichtung zum Zusammenbau nach Anspruch 1 oder 2,
**dadurch gekennzeichnet, dass** das Teil (5) wie ein Clip für eine elastische mechanische Fixierung der Clipart ausgelegt ist.

4. Vorrichtung zum Zusammenbau nach einem der vorstehenden Ansprüche, **dadurch gekennzeichnet, dass** das Teil (5) Verriegelungsmittel (53) umfasst, die das unerwünschte Entfernen der Mutter aus dem Teil (5) nach dem Verknüpfen des Teils mit der Mutter (10) verhindern.

5. Vorrichtung zum Zusammenbau nach einem der vorstehenden Ansprüche, **dadurch gekennzeichnet, dass** die Immobilisierungsmittel (54), die es ermöglichen, die Vorrichtung an ihrem endgültigen Bestimmungsort zu fixieren, elastisch sind, wie Buchsen- oder Steckelemente zum Zusammenwirken mit gegenseitig zusammenwirkenden Formen einer Aufnahmeeinrichtung (2), in der die Vorrichtung für ihre Verwendung platziert werden soll.

6. Vorrichtung zum Zusammenbau nach einem der vorstehenden Ansprüche, **dadurch gekennzeichnet, dass** die Immobilisierungsmittel (54) zwei Paare von beabstandeten und vorstehenden elastischen Laschen umfassen, die zueinander geneigt sind.

7. Vorrichtung zum Zusammenbau nach einem der vorstehenden Ansprüche, **dadurch gekennzeichnet, dass** das Teil (5) einen Kern (50) und zwei Halteelemente (51, 52) umfasst, die parallel gegenüberliegend sind und mit dem Kern verbunden sind und die Flügel bilden, wobei der Kern und die Flügel einen offenen Annahmehohlraum (55, 52D) vorsehen, der zu der äußeren Umgebung offen ist und den Kragen (12) der Mutter oder den Körper (11) der Mutter aufnimmt.

8. Vorrichtung zum Zusammenbau nach einem der vorstehenden Ansprüche, **dadurch gekennzeichnet, dass** sie zum Einführen in ihren endgültigen Bestimmungsort, wie einer Aufnahme (2), vorzugsweise in einer einzigen Translationsbewegung von einem Roboter manipulierbar ist.

9. Starre Platte (3), die in ihrer Dicke mindestens einen Ausschnitt umfasst, insbesondere von der Kante (32) der Platte aus, wobei der Ausschnitt eine Annahmeaufnahme (2) bildet, in die eine Vorrichtung (1) zum Zusammenbau nach einem der vorstehenden Ansprüche eingeführt ist, wobei der Ausschnitt vorzugsweise Folgendes umfasst: einen Längsabschnitt (20), der sich von dem Plattenrand erstreckt und geeignet ist, um den Schaft einer Schraube anzunehmen, einen vorzugsweise rechteckigen Querschnitt (21), der an einem Ende des Längsabschnitts (20) gegenüber der Kante und senkrecht zu dem Längsabschnitt angeordnet ist und zum Annehmen des Kragens (12) der Mutter und gegebenenfalls des Teils (5), wenn dieses an dem Kragen (12) befestigt ist, geeignet ist, sowie einen vorzugsweise rechteckigen Endabschnitt (22), der breiter als die Breite des Querschnitts ist und geeignet ist, um den Körper (11) der Mutter und gegebenenfalls das Teil (5) anzunehmen, wenn dieses an dem Körper (11) der Mutter befestigt ist.

10. Anlage (4), die mehrere Platten (3) nach dem vorstehenden Anspruch umfasst, wobei jede Platte (3) Vorrichtungen zum Zusammenbau nach einem der Ansprüche 1 bis 7 aufnimmt und mit einer anderen Platte (43) zusammengebaut ist, die mit Bohrungen für den Durchgang von Schrauben versehen ist, die mit den Vorrichtungen zum Zusammenbau zusammenwirken, wobei die Anlage insbesondere eine Trägeranlage zum Fixieren von Führungselementen, an denen mindestens ein Roboterschlitten bewegt werden soll, bildet.

11. Verfahren zum Zusammenbauen durch Verschrauben von mindestens zwei Platten (3, 43) von mindestens einer Vorrichtung (1) zum Zusammenbau nach einem der Ansprüche 1 bis 7, umfassend die folgenden Schritte:
- das Halteteil (5) wird oder wurde vorher zum Bilden der Vorrichtung zum Zusammenbau durch Aufclipsen auf der Mutter (10) verknüpft,
- mindestens eine Vorrichtung (1) zum Zusammenbau wird in mindestens eine Aufnahme (2) eingeführt, die in einer ersten der Platten (3) in geeigneter Weise ausgeschnitten ist, wobei die Vorrichtung nach der Einführung selbstarretiert ist,
- die zweite Platte (43) wird senkrecht zu der ersten Platte angeordnet und umfasst mindestens eine der Aufnahme (2) der ersten Platte zugewandte Bohrung (43'),
- eine Schraube (6) wird in die Bohrung (43') der zweiten Platte und die Aufnahmeeinrichtung (2) der ersten Platte eingesetzt, bis sie mit dem Inneren der Mutter (10) der Vorrichtung zum Zusammenbau zusammenwirkt,
- die Schraube (6) wird verschraubt.

## Claims

1. An assembly device (1) comprising, on the one hand, a nut (10) having a hollow body (11) and a collar (12) and, on the other hand, a part (5) suitable for being removably combined with the nut to trap and lock the nut, the part (5) having means (54) for immobilizing the nut such that the part and the nut form a unitary assembly device, and the part (5) constituting a means for locking the device in its use position, the part (5) only trapping a portion of the nut and being attached either to the body (11) of the nut or to the collar (12), and the part (5) comprising retaining elements (51, 52) with a resilient gripping function forming two opposite wings, **characterized in that** the collar (12) in its extension plane projects beyond the wings (51, 52) of the part (5) in order to project beyond said part (5).

2. The assembly device according to claim 1, **characterized in that** the part (5) is suitable for being mounted by sliding with a translational movement, preferably a single translational movement, in a direction parallel or perpendicular to the extension plane of the collar, and in particular the combination of the part and the nut being performed by a robot.

3. The assembly device according to claim 1 or claim 2,
**characterized in that** the part (5) is designed, such as a clip, for resilient mechanical fastening of the snap-fitting type.

4. The assembly device according to any of the preceding claims,
**characterized in that** the part (5) comprises locking means (53) preventing the accidental removal of the nut from the part (5) once the part is combined with the nut (10).

5. The assembly device according to any of the preceding claims,
**characterized in that** the immobilizing means (54) for immobilizing the device in its final intended position have a resilient function, such as female or male elements for interacting with mutual interaction shapes of a recess (2) in which the device is intended to be placed for the use thereof.

6. The assembly device according to any of the preceding claims,
**characterized in that** the immobilizing means (54) comprise two pairs of spaced-apart resilient tabs which project and are angled towards each other.

7. The assembly device according to any of the preceding claims,
**characterized in that** the part (5) comprises a core (50) and two retaining elements (51, 52) which are opposite in parallel and connected to the core and form the wings, the core and the wings providing a receiving cavity (55, 52D) open to the outer environment and accommodating the collar (12) of the nut or the body (11) of the nut.

8. The assembly device according to any of the preceding claims,
**characterized in that** it can be handled by a robot so as to be introduced into its final intended position such as a recess (2), preferably in a single translational movement.

9. A rigid plate (3) comprising at least one cut-out in the thickness thereof, in particular starting from the edge (32) of the plate, the cut-out forming a receiving recess (2) in which an assembly device (1) according to any of the preceding claims is introduced, the cut-out preferably having a longitudinal section (20) which extends from the edge of the plate and is suitable for receiving the shaft of a screw, a transverse section (21), preferably rectangular, arranged at an end of the longitudinal section (20) opposite to the edge, and perpendicular to the longitudinal section, and suitable for receiving the collar (12) of the nut and optionally the part (5) when said part is attached to the collar (12), as well as an end section (22) which is preferably also rectangular and wider than the width of the transverse section and suitable for receiving the body (11) of the nut and optionally the part (5) when said part is attached to the body (11) of the nut.

10. An apparatus (4) comprising a plurality of plates (3) according to the preceding claim, each plate (3) accommodating assembly devices according to any of claims 1 to 7 and being assembled with another plate (43) provided with bores through which screws pass and interact with the assembly devices, in particular the apparatus forming a support apparatus for attaching guide elements on which at least one robotic carriage is intended to move.

11. A method for assembling, by bolting, at least two plates (3, 43) using at least one assembly device (1) according to any of claims 1 to 7, comprising the following steps:
- the retaining part (5) is or has been previously combined via snap-fitting with the nut (10) so as to form said assembly device,
- at least one assembly device (1) is introduced into at least one recess (2) cut out in a suitable manner in a first of the plates (3), said device being self-locking once introduced,
- the second plate (43) is arranged perpendicularly to the first plate and has at least one bore (43') facing the recess (2) of the first plate,
- a screw (6) is inserted into the bore (43') of the second plate and the recess (2) of the first plate until it interacts with the inside of the nut (10) of the assembly device,
- the screw (6) is screwed.
